# EUROPÄISCHE PATENTSCHRIFT

(11) **EP 3 576 515 B1**
(45) Veröffentlichungstag und Bekanntmachung des Hinweises auf die Patenterteilung: **16.12.2020**
(21) Anmeldenummer: 18702658.8
(22) Anmeldetag: 30.01.2018
(51) Int. Cl.: A01C 17/00, A01C 21/00, A01C 7/10

(54) **HAFTMATTE UND VERWENDUNG EINER HAFTMATTE FÜR DIE BILDGEBENDE BESTIMMUNG EINER VETEILUNG VON LANDWIRTSCHAFTLICHEM STREUGUT**
ADHESIVE MAT AND USE OF AN ADHESIVE MAT FOR DETERMINING A DISTRIBUTION OF AGRICULTURAL SCATTERING MATERIAL BY IMAGING
MAT ADHÉSIF ET UTILISATION D'UN MAT ADHÉSIF POUR LA DÉTERMINATION PAR IMAGERIE DE LA RÉPARTITION D'UN PRODUIT D'ÉPANDAGE AGRICOLE

(30) Priorität: 02.02.2017 DE 102017102013
(43) Veröffentlichungstag der Anmeldung: 11.12.2019
(60) Teilanmeldung: 20202702.5
(73) Patentinhaber: Amazonen-Werke H. Dreyer GmbH & Co. KG, 49205 Hasbergen (DE)
(72) Erfinder: NIENSTERMANN, Heinke, 49078 Osnabrück (DE); HOFTER, Rainer, 49143 Bissendorf (DE)
(86) Internationale Anmeldenummer: PCT/EP2018/052201
(87) Internationale Veröffentlichungsnummer: WO 2018/141709

(56) Entgegenhaltungen:
- DE-A1-102004 017 075
- DE-A1-102014 103 964
- US-A1- 2007 066 467

## Beschreibung

Die Erfindung betrifft ein Haftmatte zur Bestimmung der Verteilung von landwirtschaftlichem Streugut, sowie die Verwendung einer Haftmatte für die bildgebende Bestimmung einer Verteilung von landwirtschaftlichem Streugut.

Zur Bestimmung der Verteilung von Düngerkörnern, insbesondere quer zur Fahrtrichtung eines Düngerstreuers, sind gattungsgemäße Verfahren und Haftmatten beispielsweise aus der DE 10 2014 103 964 A1 bekannt. Demnach werden Haftmatten oder Platten zunächst zum Auffangen und Festhalten ausgestreuter Düngerkörner ausgelegt. Danach werden Düngerkörner beim Überfahren eines von Haftmatten oder Platten bedeckten Bodenbereiches mit einem Düngerstreuer ausgestreut. Die bestreuten Haftmatten werden dann in wenigstens einem Digitalkamerabild abgebildet. Schließlich erfolgen das Lokalisieren der Düngerkörner im Kamerabild und das Berechnen einer Ist-Verteilung der Düngerkörner auf den Haftmatten. Diese Ist-Verteilung kann dann mit einer Soll-Verteilung verglichen und das Ergebnis zur Einstellung der Streuorgane verwendet werden.

Es hat sich herausgestellt, dass die Handhabung solcher Haftmatten insbesondere im Arbeitsbetrieb auf Ackerflächen unpraktisch sein kann. So lassen sich beispielsweise nur schwer mehrere Haftmatten gleichzeitig von einer Person transportieren, so dass unter Umständen eine Vielzahl von Gängen zwischen dem landwirtschaftlichen Fahrzeug, in dem die Haftmatten aufbewahrt werden, und den Stellen, an denen die Haftmatten ausgelegt werden sollen, erforderlich sind. Zudem gestaltet sich das Tragen, Auslegen und Aufnehmen der Haftmatten unter Umständen unpraktisch.

Aufgabe der Erfindung ist es daher, Haftmatten, die einfach in der Handhabung, insbesondere bei der Verwendung auf Ackerflächen sind, bereitzustellen.

Die gestellte Aufgabe wird von einer Haftmatte gemäß Anspruch 1 gelöst. Weitere vorteilhafte Ausgestaltungen der Erfindung sind in den abhängigen Ansprüchen angegeben.

Unter einer Haftmatte ist hier ein flächiges Element zu verstehen, das insbesondere aus einem flexiblen Material hergestellt ist. Beispielsweise kann sie aus Kunststoff hergestellt sein. Insbesondere kann der Kunststoff ein thermoplastisches Elastomer sein. Die Haftmatte kann sich im Wesentlichen in einer Ebene erstrecken, wobei die Ausdehnung in dieser Ebene (Länge, Breite) um ein Vielfaches größer ist, als in einer Richtung senkrecht zu dieser Ebene (Dicke). Die Haftmatte kann im Grunde jede beliebige geometrische Form aufweisen; vorzugsweise ist sie quaderförmig ausgebildet.

Gemäß der Erfindung beinhaltet die Haftmatte einen Auffangbereich, der an mindestens einer Seite zumindest teilweise von einem Randbereich begrenzt wird. Der Randbereich ist gemäß einer Alternative der Erfindung mit einer Durchgangsöffnung versehen.

Diese ermöglicht insbesondere den einfachen Transport mehrerer Haftmatten, die beispielsweise über ihre jeweiligen Öffnungen miteinander verbunden, und so gemeinsam getragen werden können. Desweiteren besteht der Vorteil, dass mehrere Haftmatten zur Aufbewahrung gleichzeitig auf eine geeignete Halterung, beispielsweise einen Haken, gehängt werden können. Alternativ oder ergänzend kann der Randbereich der Haftmatte auch einen Handgriff umfassen, wobei der Handgriff das Greifen der Haftmatte mittels einer Hand ermöglicht. In einer besonders vorteilhaften Ausführung der Erfindung kann die Durchgangsöffnung selbst so ausgebildet sein, dass sie als Handgriff verwendet werden kann. Der Handgriff kann aber auch von einem Element gebildet werden, welches, beispielsweise schlaufenförmig, senkrecht zu der Ebene, in der sich die Haftmatte im Wesentlichen erstreckt, ausgebildet ist.

Die Haftmatte kann vorzugsweise einteilig ausgebildet sein, das heißt, der Randbereich der Haftmatte grenzt allein durch seine Ausbildung den Auffangbereich der Haftmatte an mindestens einer Seite ab. Dies kann dadurch verwirklicht sein, dass der Randbereich gegenüber dem Auffangbereich abgehoben oder -gesenkt strukturiert ist, der Randbereich also eine vom Auffangbereich unterschiedliche Dicke aufweist, oder dass seine Oberflächen- oder Materialbeschaffenheit (z.B. Dichte oder Material) anders als die des Auffangbereichs ist. Insbesondere kann der Randbereich den Auffangbereich auf allen Seiten vollständig begrenzen und so einen "Rahmen" um den Auffangbereich bilden.

Der Auffangbereich weist eine Vielzahl von noppenartigen Erhebungen auf, welche in einem Raster im Auffangbereich angeordnet sind. Dies bietet den Vorteil, dass durch die Erhebungen eine Vielzahl, insbesondere gleich großer, Auffangräume gebildet werden, in denen die Körner des Streuguts an den Stellen zurückgehalten werden können, an denen sie auf die Haftmatte auftreffen. Die noppenartigen Erhebungen können beispielsweise die Form von Stäbchen, Zungen, Haken oder dergleichen haben, die sich von der Oberfläche der Matte erstrecken.

Der Auffangbereich weist ferner mindestens eine Markierung auf. Eine solche Markierung kann in vielerlei Hinsicht hilfreich bei der Vorbereitung für die Aufnahme der Haftmatte mit einer Kamera sein. So kann sie die Positionierung einer Digitalkamera, z.B. der Kamera eines Smartphones, bei der Aufnahme der Körnerverteilung erleichtern oder durch eine bestimmte Farbgebung die Farbkalibrierung der Kamera oder einer für die Auswertung eines Kamerabildes verwendeten Anwendung ermöglichen. Insbesondere kann die Markierung eine bekannte, von der Grundfarbe der Haftmatte verschiedene Farbgebung haben. Die Grundfarbe der Haftmatte kann die Farbe sein, welche die Haftmatte, insbesondere der Auffangbereich, überwiegend aufweist.

Die mindestens eine Markierung wird durch eine ausgesparte Fläche im Raster der noppenartigen Erhebungen ausgebildet . So kann die Markierung bereits beim Herstellungsprozess der Haftmatte gebildet werden, was gewährleisten kann, dass die Markierung bei allen Haftmatten einheitlich gestaltet ist.

Der Auffangbereich der Haftmatte kann in der Ebene, in der sich die Haftmatte wesentlich erstreckt, rechteckig ausgebildet sein, wobei in jeweils einer Ecke der Haftmatte eine Markierung angebracht ist. Dies ist vorteilhaft, da die Markierungen es dem Benutzer so ermöglichen, auf einfache Weise die Kamera so zu positionieren, dass der Auffangbereich das aufzunehmende Digitalkamerabild optimal ausfüllt, d.h., dass der gesamte Auffangbereich und gleichzeitig so wenig wie möglich des Randbereichs abgelichtet wird.

Die Durchgangsöffnung kann so ausgebildet sein, dass sie entlang einer Achse, die in der Ebene, in der sich die Haftmatte im Wesentlichen erstreckt, liegt eine Ausdehnung von weniger als 350 mm und mehr als 90 mm, insbesondere weniger als 175 mm und mehr als 110 mm aufweist, und sie entlang einer zweiten in dieser Ebene der Haftmatte liegenden Achse, die senkrecht zur ersten Achse verläuft, eine Ausdehnung von weniger als 100 mm und mehr als 35 mm, insbesondere weniger als 60 mm und mehr als 40 mm aufweist. Diese Ausbildung der Durchgangsöffnung ermöglicht das einfache Aufnehmen, Tragen sowie Auslegen einer Haftmatte mit einer Hand.

Die Erfindung stellt außerdem die Verwendung wenigstens einer oben beschriebenen Haftmatte zur bildgebenden Bestimmung einer Verteilung von landwirtschaftlichem Streugut gemäß Anspruch 4 bereit.

Die wenigstens eine Haftmatte kann an einer Stelle auf einem Feld oder einer Testfläche angeordnet werden. Im Anschluss daran kann granulares Streugut aus einem an der Haftmatte vorbeifahrenden Streufahrzeug, welches insbesondere ein Zentrifugalstreuer sein kann, über der Haftmatte verstreut werden. Zuletzt kann die Verteilung des Streugutes auf der Haftmatte mittels eines bildgebenden Verfahrens ermittelt werden. Die so erhaltene Ist-Verteilung kann dann mit einer in einem Speicher hinterlegten oder sonst bereitgestellten Soll-Verteilung verglichen und das Ergebnis des Vergleichs zur Einstellung der Streuorgane des Streufahrzeugs verwendet werden.

Die Durchgangsöffnung kann dabei als Handgriff zum Auslegen bzw. Tragen der Haftmatte verwendet werden.

Im Laufe des bildgebenden Verfahrens können die Markierungen auf der Matte zur korrekten Positionierung der Kamera verwendet werden.

Die Haftmatte kann eines oder mehrere der oben beschriebenen Merkmale aufweisen.

Weitere Merkmale der Erfindung werden nachfolgend anhand der beispielhaften Figuren erläutert. Dabei zeigt:
- Fig. 1: eine schematische Darstellung der erfindungsgemäßen Verwendung einer Haftmatte; und
- Fig. 2: eine schematische Darstellung einer erfindungsgemäßen Haftmatte.

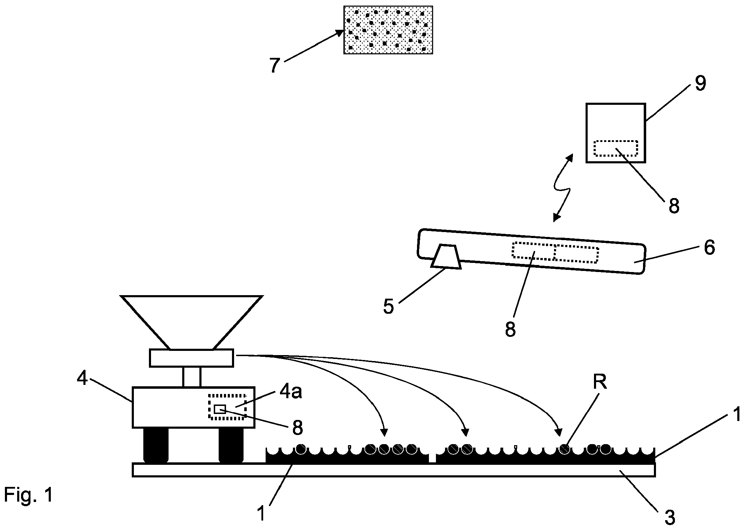

Fig. 1 zeigt schematisch die Verwendung einer Haftmatte 1 zur bildgebenden Bestimmung der Verteilung von landwirtschaftlichem Streugut auf einer Fläche 3. Dabei wird mindestens eine, aber typischerweise zwei oder mehr, Haftmatten 1 auf einer Ackerfläche, einem Feld, einer Testfläche oder ähnlichem ausgelegt Anschließend daran bewegt sich ein landwirtschaftliches Streufahrzeug 4, beispielsweise ein Zentrifugalstreuer, an den Haftmatten 1 vorbei und verteilt dabei die Streugutkörner 2 auf der Fläche 3. Die im Nachfolgenden noch genauer beschriebenen Haftmatten 1 sind dabei so ausgebildet, dass sie die im Bereich der Haftmatten 1 ausgebrachten Streugutkörner 2 im Wesentlichen an den Stellen zurückhalten, an denen sie auf die Haftmatten 1 auftreffen.

Nachdem ein Anteil der Streugutkörner 2 auf diese Weise auf die Haftmatten 1 verteilt wurde, wird mittels eines Bildaufnahmegerätes 5, welches beispielsweise eine Digitalkamera, insbesondere eine integrierte Kamera eines Mobilfunkgerätes 6 (z.B. eines Smartphones), sein kann, eine Abbildung 7 der Verteilung der Streugutkörner 2 auf den Haftmatten 1 erstellt. Dabei kann insbesondere für jede Haftmatte 1 eine separate Abbildung erstellt werden.

Die Abbildung 7 kann dann in digitaler Form von einer Recheneinheit 8 ausgewertet werden, um eine Ist-Verteilung der Streugutkörner 2 auf der Haftmatte 1 zu bestimmen. Gemäß einem Beispiel ist die Recheneinheit 8 ebenso wie die Kamera 5 Teil des Mobilfunkgerätes 6, so dass die Aufnahme und Auswertung mit demselben Gerät durchgeführt werden kann. Dadurch entfällt die Notwendigkeit, die Bilder 7 auf ein anderes Gerät zu übermitteln, was Zeit und Ressourcen spart.

Alternativ kann die Recheneinheit 8 aber auch Teil des Bordcomputers 4a des Streufahrzeugs 4, oder eines separaten Computersystems 9 sein. In diesem Fall erfolgt die Übermittlung der Abbildungen 7 vorzugweise mittels drahtloser Kommunikation zwischen dem Mobilfunkgerät 6 und dem Bordcomputer 4a oder dem Computersystem 9. Die Bilder 7 können aber auch mittels eines Kabels, z.B. eines USB-Kabels, von dem Mobilfunkgerät 6 oder direkt vom Bildaufnahmegerät 5 auf den Bordcomputer 4a oder das Computersystem 9 übertragen werden.

Eine weitere Möglichkeit besteht darin, einen Abzug eines Bildes 7 mittels eines Scanners zu digitalisieren und diesen dann auf den Bordcomputer 4a oder das Computersystem 9 zu übertragen.

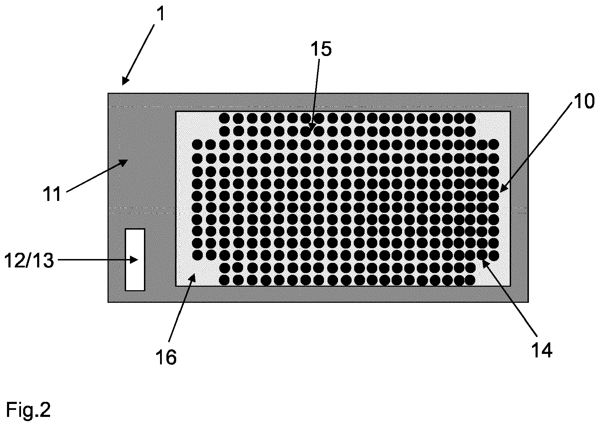

Fig. 2 zeigt schematisch eine erfindungsgemäße Haftmatte 1. Die Haftmatte 1 umfasst dabei einen Auffangbereich 10, der vollständig von einem Randbereich 11 begrenzt wird. Dabei ist typischerweise die Haftmatte 1 einstückig ausgebildet, und der Auffangbereich 10 ist gegenüber dem Randbereich 11 abgesenkt. Mit anderen Worten bildet der Auffangbereich 10 eine Mulde in der Haftmatte 1, die vom Randbereich 11 begrenzt wird. Die Haftmatte kann auch anders ausgebildet werden, beispielsweise könnten der Randbereich und der Auffangbereich mittels Mehrkomponenten-Spritzgießen ausgebildet werden. Insbesondere kann der Randbereich aus Polypropylen (PP) oder Polyethylen (PE) und der Auffangbereich aus thermoplastischem Elastomer bestehen. Äußere Abmessungen der Haftmatte können für die Länge im Bereich von 550 mm bis 700 mm, für die Breite im Bereich von 350 mm bis 450 mm liegen. Die Dicke des Randbereichs 11 kann im Bereich von 10 mm bis 15 mm liegen. Die Abmessungen des Auffangbereichs 10 können im Bereich von 500 mm bis 650 mm für die Länge und im Bereich von 300 mm bis 400 mm für die Breite liegen. Die Dicke der Haftmatte im Auffangbereich 10 kann im Bereich von 3 mm bis 6 mm liegen.

In der in Fig. 2 gezeigten Ausführungsform weist der Randbereich 11 eine Durchgangsöffnung 12 auf, die hier gleichzeitig als Handgriff verwendet werden kann. Dabei sind die Dimensionen der Durchgangsöffnung 12 so gewählt, dass sie das Aufnehmen und Tragen der Haftmatte 1 mit einer Hand erlauben. Die Länge der Durchgangsöffnung kann im Bereich von 90 mm bis 350 mm, vorzugsweise im Bereich von 110 mm bis 175 mm liegen, die Breite im Bereich von 35 mm bis 100 mm, vorzugsweise im Bereich von 40 mm bis 60 mm. Des Weiteren ermöglicht eine derartige Gestaltung der Durchgangsöffnung 12, dass mehrere Haftmatten 1 gleichzeitig mit einer Hand getragen werden können. Dabei ordnet ein Nutzer die Haftmatten 1 so an, dass die Durchgangsöffnungen 12 übereinander zu liegen kommen, und greift dann mit einer Hand durch die so entstehende Öffnung aller Haftmatten 1 gleichzeitig.

In ähnlicher Art und Weise können die Durchgangsöffnungen 12 so auch dazu verwendet werden, eine Vielzahl von Haftmatten 1 platzsparend gemeinsam, z.B. an einem Haken oder einer Stange, aufzubewahren.

Der Auffangbereich der Haftmatte 1 enthält noppenartige Erhebungen 14, die in einem Raster angeordnet sind. Durch die Erhebungen 14 werden eine Vielzahl von Auffangräumen 15 gebildet, in denen sich bei Verwendung der Haftmatte 1 Streugutkörner 2 sammeln. Typischerweise sind die Abstände des Rasters so dimensioniert, dass die Größe der Auffangräume 15 jeweils in etwa der Größe eines Streugutkorns 2 entspricht.

Die lichten Weiten der Auffangräume 15 können vorzugsweise im Bereich von 2 bis 5 mm liegen. Damit lassen sich Streugutkörner 2, wie z.B. die Körner herkömmlicher Düngersorten, die beispielsweise Korngrößen von 1 mm bis 3 mm aufweisen, in den Auffangräumen 15 einzeln und/oder in geeignet kleinen Gruppen von beispielsweise höchstens fünf Streugutkörnern 2 auffangen. Je nach dem Profil der zwischen den Auffangräumen 15 abstehenden Erhebungen 14 ergeben sich daraus günstige Rasterweiten, d.h. Abstände zwischen den Mittelpunkten der Erhebungen 14, von etwa 5 mm bis 10 mm.

Die noppenartigen Erhebungen 14 können eine Vielzahl unterschiedlicher Profile besitzen, die das Zurückhalten der Streugutkörner 2 begünstigen. So können die Erhebungen 14 beispielsweise die Form von Stäbchen oder Zungen haben, d.h. Formen die im Wesentlichen durch die Extrusion eines Kreises bzw. einer Ellipse entstehen, wie beispielsweise Zylinder oder Konusse mit kreisförmiger oder elliptischer Grundfläche. Die Höhe der Erhebungen 14 kann im Bereich von 8 mm bis 12 mm liegen.

Die Haftmatte 1 kann aus einem Material gefertigt sein, welches strapazierfähig, leicht zu handhaben und flexibel ist. Insbesondere kann die Matte aus einem Kunststoff, beispielsweise einem thermoplastischen Elastomer, gefertigt sein. Durch die Wahl einer entsprechenden Shore-A-Härte und Dicke der Matte kann sicher gestellt werden, dass die Matte leicht zu tragen und stabil ist, und sich auch auf unebenen Böden gut auslegen lässt. Die Shore-A-Härte kann beispielsweise im Bereich von 60 bis 90 liegen.

In Fig. 2 ist zudem gezeigt, dass der Auffangbereich 10 der Haftmatte 1 Markierungen 16 aufweist. Die Markierungen 16 sind in diesem Ausführungsbeispiel durch Aussparungen im Raster der Erhebungen 14 ausgebildet und in den Ecken des Auffangbereichs 10 angeordnet. Insbesondere eine solche Anordnung erleichtert es dem Benutzer bei der erfindungsgemäßen Verwendung der Haftmatte 1, das Bildaufnahmegerät 5 so zu positionieren, dass der Auffangbereich 10 das aufgenommene Bild 7 optimal ausfüllt. Die Kamera 5 kann dann nämlich so positioniert werden, dass die Markierungen 16 im Sucher oder auf dem Bildschirm der Kamera 5 genau am Rand des Bildes erscheinen. Dadurch kann sichergestellt werden, dass auf der einen Seite der gesamte Auffangbereich 10 abgebildet wird, und auf der anderen Seite ein möglichst kleiner Teil des Randbereichs 11 oder sonstiger Teile der Haftmatte 1 auf dem Bild 7 erscheint. Dies erleichtert die Auswertung des Bildes 7 durch die Recheneinheit 8, da nicht für die Auswertung relevante Teile der Haftmatte 1 möglichst gar nicht auf dem Bild 7 erscheinen, und so die Bilderkennung vereinfacht wird.

Die Größe der Markierungen 16 ist so gewählt, dass sie für den Benutzer bei der Aufnahme einfach zu erkennen sind. Die Formen und Größen für solche Markierungen können beispielsweise Quadrate mit einer Seitenlänge von 30 mm bis 40 mm sein.

Die Markierungen 16 können auch anders geformt und/oder angeordnet sein. Es ist auch denkbar, dass auf einem Mobilfunkgerät 6 eine Applikation ausgeführt wird, die bereits bei der Vorbereitung der Aufnahme eine Markierung erkennt und dem Benutzer vorschlägt, die Kamera 5 des Mobilfunkgerätes 6 in einer bestimmten Art und Weise zu positionieren, beispielsweise durch entsprechende Anweisungen, die dem Benutzer am Bildschirm der Kamera 5 angezeigt werden. Die Applikation könnte die Form der verwendeten Haftmatte 1 oder der Markierung 16 aus einer Datenbank kennen und daher auch nur aufgrund einer Markierung 16 die optimale Positionierung der Kamera 5 vorschlagen. So könnte die Applikation beispielweise aus der Datenbank entnehmen, dass bei einer bestimmten Haftmatte die Markierung 16 die Form eines Pfeils hat welcher parallel zu einer Kante des Auffangbereichs verläuft. Zudem könnte die Applikation die Information besitzen, dass die Markierung 16 an einer bestimmten Stelle des Auffangbereichs angeordnet ist, beispielsweise in der Mitte des Auffangbereichs oder an einem der vier Ränder, wobei die Ränder "oben", "unten", "rechts" und "links" durch die Pfeilrichtung definiert sind. Die Applikation könnte dann vom Anwender die Information abfragen, wie der Pfeil aufgrund der Anordnung der Haftmatte auf dem Feld relativ zur Fahrtrichtung des Streufahrzeugs 4 orientiert ist. Darauf basierend könnte die Applikation dem Anwender dann Anweisungen erteilen, wie die Kamera 5 zu positionieren ist, so dass z.B. immer der obere Rand eines aufgenommenen Bildes 7 den in Fahrtrichtung weiter entfernten Rand des Auffangbereichs 10 zeigt. So könnte sichergestellt werden, dass alle aufgenommenen Bilder 7 dieselbe Orientierung haben.

Die Markierungen 16 können weiterhin eine Farbgebung besitzen, die sich von der Farbe des Innenraums 10 der Haftmatte 1 unterscheidet. Insbesondere kann eine, oder mehrere, der Markierungen eine bekannte Farbgebung haben, die von der Recheneinheit 8 verwendet werden kann, um eine Farbkalibrierung des Bildes 7 vorzunehmen. Dies ist vorteilhaft, da die Verwendung der Haftmatte 1 unter verschiedenen Umgebungsbedingungen, insbesondere in verschiedenen Lichtverhältnissen, stattfinden kann. Ein Bild 7, welches unter freiem Himmel auf einer Ackerfläche aufgenommen wird, kann sich im Farbton von einem Bild unterscheiden, welches bei der Verwendung einer Haftmatte 1 auf einer Testfläche in einer Fabrikhalle aufgenommen wurde, obwohl dieselbe Haftmatte 1 und dasselbe Streugut verwendet wurde.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind, aber dass diese von den Ansprüchen definiert sind. Insbesondere kann die Haftmatte bzw. deren Durchgangsöffnung verschiedene Formen oder Geometrien aufweisen.

## Patentansprüche

1. Haftmatte (1) für die bildgebende Bestimmung einer Verteilung von landwirtschaftlichem Streugut, wobei die Haftmatte einen Auffangbereich (10) umfasst, der mindestens an einer Seite zumindest teilweise von einem Randbereich (11) begrenzt wird,
wobei der Randbereich (11) eine Durchgangsöffnung (12) und/oder einen Handgriff (13) umfasst, wobei der Auffangbereich eine Vielzahl von noppenartigen Erhebungen (14) umfasst, welche in einem Raster auf dem Auffangbereich angeordnet sind,
wobei der Auffangbereich ferner mindestens eine Markierung (16) aufweist, und
wobei die mindestens eine Markierung durch Aussparungen im Raster der noppenartigen Erhebungen ausgebildet ist.

2. Haftmatte gemäß Anspruch 1, wobei
der Auffangbereich rechteckig ausgebildet ist, und jeweils eine Markierung in den Ecken des Auffangbereichs angeordnet ist.

3. Haftmatte gemäß einem der vorhergehenden Ansprüche, wobei
die Durchgangsöffnung entlang einer in der Ebene der Haftmatte liegenden ersten Achse eine Ausdehnung von weniger als 350 mm und mehr als 90 mm, insbesondere weniger als 175 mm und mehr als 110 mm aufweist, und die Durchgangsöffnung entlang einer zweiten in der Ebene der Haftmatte liegenden Achse, die senkrecht zur ersten Achse ist, eine Ausdehnung von weniger als 100 mm und mehr als 35 mm, insbesondere weniger als 60 mm und mehr als 40 mm aufweist.

4. Verwendung wenigstens einer Haftmatte gemäß einem der vorhergehenden Ansprüche zur bildgebenden Bestimmung einer Verteilung von landwirtschaftlichem Streugut.

5. Verwendung gemäß Anspruch 4, wobei
die wenigstens eine Haftmatte an einer Stelle auf einem Feld oder einer Testfläche (3) angeordnet wird;
granulares Streugut aus einem an der wenigstens einen Haftmatte vorbeifahrenden Streufahrzeug (4) über der wenigstens einen Haftmatte verstreut wird;
die Verteilung des Streugutes auf der Haftmatte mittels eines bildgebenden Verfahrens ermittelt wird.

6. Verwendung gemäß Anspruch 5, wobei
die Öffnung im Randbereich der wenigstens einen Haftmatte als Handgriff zum Tragen und/oder Auslegen der wenigstens einen Haftmatte verwendet wird.

7. Verwendung wenigstens einer Haftmatte gemäß einem der Ansprüche 4 bis 6, wobei
die mindestens eine Markierung zur Bestimmung der korrekten Positionierung einer Kamera (5) verwendet wird.

## Claims

1. Adhesive mat (1) for the imaging determination of a distribution of agricultural spreading material, wherein the adhesive mat comprises a collecting region (10), which is at least partially bounded at least on one side by an edge region (11), wherein the edge region (11) comprises a through opening (12) and/or a handle (13), wherein the collecting region comprises a multiplicity of pimple-like elevations (14) which are arranged in a grid on the collecting region, wherein the collecting region furthermore has at least one marking (16), and wherein the at least one marking is formed by means of cutouts in the grid of the pimple-like elevations.

2. Adhesive mat (1) according to Claim 1, wherein the collecting region is rectangular, and a marking is arranged in each of the corners of the collecting region.

3. Adhesive mat (1) according to either of the preceding claims, wherein the through opening has an extent of less than 350 mm and more than 90 mm, in particular less than 175 mm and more than 110 mm, along a first axis lying in the plane of the adhesive mat, and the through opening has an extent of less than 100 mm and more than 35 mm, in particular less than 60 mm and more than 40 mm, along a second axis lying in the plane of the adhesive mat.

4. Use of at least one adhesive mat according to one of the preceding claims for the imaging determination of a distribution of agricultural spreading material.

5. Use according to Claim 4, wherein the at least one adhesive mat is arranged at a location in a field or on a test area (3);
granular spreading material is scattered over the at least one adhesive mat from a spreading vehicle (4) travelling past the at least one adhesive mat;
the distribution of the spreading material on the adhesive mat is determined by means of an imaging method.

6. Use according to Claim 5, wherein the opening in the edge region of the at least one adhesive mat is used as a handle for carrying and/or laying out the at least one adhesive mat.

7. Use of at least one adhesive mat according to one of Claims 4 to 6, wherein the at least one marking is used for determining the correct positioning of a camera (5).

## Revendications

1. Tapis adhésif (1) destiné à déterminer par imagerie la distribution de produit d'épandage agricole, le tapis adhésif comprenant une zone de collecte (10) qui est délimitée au moins sur un côté au moins partiellement par une zone de bord (11),
la zone de bord (11) comprenant une ouverture de passage (12) et/ou une poignée (13),
la zone de collecte comprenant une pluralité d'élévations (14) en forme de bouton qui sont disposées suivant une trame sur la zone de collecte,
la zone de collecte comprenant en outre au moins un marquage (16), et
l'au moins un marquage étant formé par des découpes ménagées dans la trame des élévations en forme de bouton.

2. Tapis adhésif selon la revendication 1,
la zone de collecte étant rectangulaire et un marquage étant disposé dans chacun des coins de la zone de collecte.

3. Tapis adhésif selon l'une des revendications précédentes,
l'ouverture de passage ayant, suivant un premier axe situé dans le plan du tapis adhésif, une étendue inférieure à 350 mm et supérieure à 90 mm, en particulier inférieure à 175 mm et supérieure à 110 mm, et l'ouverture de passage ayant, suivant un deuxième axe situé dans le plan du tapis adhésif et perpendiculaire au premier axe, une étendue inférieure à 100 mm et supérieure à 35 mm, en particulier inférieure à 60 mm et supérieure à 40 mm.

4. Utilisation d'au moins un tapis adhésif selon l'une des revendications précédentes pour déterminer par imagerie une distribution de produit d'épandage agricole.

5. Utilisation selon la revendication 4,
l'au moins un tapis adhésif étant disposé à un emplacement dans un champ ou sur une surface de test (3) ;
un produit d'épandage granulaire qui provient d'un véhicule d'épandage (4) passant devant l'au moins un tapis adhésif étant dispersé sur l'au moins un tapis adhésif ;
la distribution du produit d'épandage sur le tapis adhésif étant déterminée au moyen d'un procédé d'imagerie.

6. Utilisation selon la revendication 5,
l'ouverture ménagée dans la région de bord de l'au moins un tapis adhésif étant utilisée comme poignée pour porter et/ou étaler l'au moins un tapis adhésif.

7. Utilisation d'au moins un tapis adhésif selon l'une des revendications 4 à 6,
l'au moins un marquage étant utilisé pour déterminer le positionnement correct d'une caméra (5).
